# EUROPEAN PATENT APPLICATION

(11) **EP 2 070 756 A1**
(43) Date of publication of application: **17.06.2009**
(21) Application number: 07831265.9
(22) Date of filing: 06.11.2007
(51) Int. Cl.: B60K 6/387, B60K 6/36, B60K 6/40, B60K 6/445, B60K 17/04, B60L 11/14, F16D 11/04, F16D 13/46, F16D 25/10

(54) **COUPLING DEVICE, POWER OUTPUT APPARATUS WITH THE DEVICE, AND HYBRID VEHICLE**

(30) Priority: 22.11.2006 JP 2006315679
(71) Applicant: Toyota Jidosha Kabushiki Kaisha, Toyota-shi, Aichi 471-8571 (JP)
(72) Inventor: OBA, Hidehiro, Toyota-shi Aichi 471-8571 (JP); IDESHIO, Yukihiko, Toyota-shi Aichi 471-8571 (JP)
(74) Representative: TBK-Patent
(86) International application number: PCT/JP2007/071533
(87) International publication number: WO 2008/062659

(57) **Abstract**

A clutch C1 includes a first engaging portion 110 of a first motor shaft 46, a second engaging portion 120 of a carrier shaft 45a, a third engaging portion 130 of a sun gear shaft 62a having a flange portion 131 facing the second engaging portion 120, a first movable engaging member 151 that can engage with both the first and third engaging portions 110 and 130, and a second movable engaging member 152 including a sliding portion 154 slidably supported by the sun gear shaft 62a, an engaging portion 156 that can engage with the second engaging portion 120 on the side closer to the carrier shaft 45a than the flange portion 131, and a connecting portion 158 that connects the sliding portion 154 and the engaging portion 156 and has a projecting piece 158b inserted into a hole portion 134 of the flange portion 131, and actuators 141 and 142.

## Description

### Technical Field

The present invention relates to a coupling device for coupling rotational elements, and a power output apparatus and a hybrid vehicle including the coupling device.

### Background Art

A conventionally known power output apparatus of this type includes an internal combustion engine, two electric motors, a so-called Ravigneaux-type planetary gear mechanism, and a parallel shaft-type transmission that can selectively couple two output elements of the planetary gear mechanism to an output shaft (for example, Patent Document 1). Another conventionally known power output apparatus includes a planetary gear device including an input element and two output elements connected to an internal combustion engine, and a parallel shaft-type transmission including countershafts connected to corresponding output elements of the planetary gear mechanism (for example, see Patent Document 2). A further known power output apparatus includes an internal combustion engine, two planetary gear mechanisms, and an electric motor connected to one output shaft of each planetary gear mechanism, and can selectively output power from the other output shaft of each planetary gear mechanism to a power output shaft (for example, see Patent Document 3).
Patent Document 1: Japanese Patent Laid-open No. 2005-155891
Patent Document 2: Japanese Patent Laid-open No. 2003-106389
Patent Document 3: Japanese Patent Laid-open No. 2005-001564

### Disclosure of the Invention

With the above described power output apparatuses, power from the two output elements can be selectively outputted to the output shaft to increase power transmission efficiency. In the power output apparatuses, however, the parallel shaft-type transmission is used for selectively outputting power from the two output elements to the output shaft, which makes a structure complicated and increases a mounting space.

The present invention has an object to provide a coupling device that can selectively couple a first rotational element and a second rotational element to a third rotational element, and has a simpler and more compact configuration, and a power output apparatus and a hybrid vehicle including the coupling device.

A coupling device, and a power output apparatus and a hybrid vehicle including the coupling device according to the present invention adopt the following means.

The present invention is directed to a coupling device that can selectively couple a first rotational element and a second rotational element arranged coaxially with each other to a third rotational element arranged coaxially with the first and second rotational elements. The coupling device includes: a first engaging portion provided in the first rotational element; a second engaging portion provided in the second rotational element so as to be spaced apart from the first engaging portion in an axial direction of the first, second and third rotational elements; a flange-like third engaging portion provided in the third rotational element so as to face the second engaging portion; a first movable engaging element that can engage with both the first engaging portion and the third engaging portion and is arranged movably in the axial direction; a first drive unit that moves the first movable engaging element in the axial direction; a second movable engaging element including a sliding portion supported by the third rotational element slidably in the axial direction, an engaging portion that can engage with the second engaging portion on the side closer to the second rotational element than the third engaging portion, and a connecting portion that connects the sliding portion and the engaging portion and has an insertion portion inserted into a hole portion formed in the third engaging portion; and a second drive unit that is connected to the connecting portion of the second movable engaging element, and moves the second movable engaging element in the axial direction.

In the coupling device, the first drive unit moves the first movable engaging element forward and backward in the axial direction of the first, second and third rotational elements to allow the first movable engaging element to engage with both the first engaging portion and the third engaging portion to couple the first rotational element and the third rotational element, or uncouple the first rotational element from the third rotational element. Also, the second drive unit moves the second movable engaging element forward and backward in the axial direction of the first, second and third rotational elements to allow the second movable engaging element to engage with both the second engaging portion and the third engaging portion to couple the second rotational element and the third rotational element, or uncouple the second rotational element from the third rotational element. Thus, with the coupling device, one or both of the first and second rotational elements can be selectively coupled to the third rotational element. Further, the second movable engaging element including the sliding portion supported by the third rotational element slidably in the axial direction, the engaging portion that can engage with the second engaging portion on the side closer to the second rotational element than the third engaging portion, and the connecting portion that connects the sliding portion and the engaging portion and has the insertion portion inserted into the hole portion formed in the third engaging portion is used, and thus the first, second and third engaging portions can be brought close to each other to particularly reduce the axial length of the coupling device, thereby providing a compact coupling device. The coupling device includes a relatively small number of components, thereby providing a simpler overall configuration.

Moreover, the sliding portion of the second movable engaging element may be slidably supported by an outer peripheral portion of the third rotational element on the side opposite from the second engaging portion of the third engaging portion and integrated with the connecting portion, wherein the insertion portion of the connecting portion can project through the hole portion of the third engaging portion toward the second engaging portion, and wherein the engaging portion of the second movable engaging element is formed at a free end portion of the insertion portion. Specifically, the second movable engaging element including the sliding portion, the engaging portion, and the connecting portion engage with the third rotational element slidably in the axial direction on the side opposite from the second engaging portion of the third engaging portion and can engage with the second engaging portion through the hole portion formed in the third engaging portion. In the second movable engaging element, most part of the connecting portion is located on the side opposite from the second engaging portion of the third engaging portion (outside). This allows the connecting portion of the second movable engaging element and the second drive unit to be easily coupled, and provides a simpler overall configuration of the coupling device.

Further, the sliding portion of the second movable engaging element may be slidably supported by an outer peripheral portion of the third rotational element on the side closer to the second engaging portion than the third engaging portion, and wherein the insertion portion of the connecting portion may be a coupling member that is secured to the connecting portion, the insertion portion projecting through the hole portion of the third engaging portion so as to be spaced apart from the second engaging portion and being coupled to the second drive unit. The second movable engaging element including the sliding portion, the engaging portion, and the connecting portion engages with the third rotational element slidably in the axial direction on the side closer to the second engaging portion than the third engaging portion and can engage with the second engaging portion, and is coupled to the second drive unit via the coupling member (insertion portion) inserted into the hole portion formed in the third engaging portion. The second movable engaging element can be relatively easily produced, and thus the second movable engaging element can be used to provide a simpler overall configuration of the coupling device. Further, the coupling member as the insertion portion inserted into the hole portion formed in the flange-like third engaging portion can be used to easily couple the second movable engaging element and the second drive unit.

Moreover, in the coupling device of the present invention, the first engaging portion may be a flange portion formed at an end portion of the first rotational element, and wherein the first movable engaging element can engage with both an outer peripheral portion of the flange portion and the third engaging portion. This reduces a space between the outer peripheral portion of the first engaging portion and the third engaging portion, thereby reducing the size of the first movable engaging element and reducing a drive load of the first drive unit.

Further, in the coupling device of the present invention, the first engaging portion may be formed in an outer periphery of an end portion of the first rotational element, and wherein the first movable engaging element may engage with the first engaging portion slidably in the axial direction. Thus, the first movable engaging element is supported at the end of the first rotational element slidably in the axial direction, thereby allowing stable and smooth movement of the movable rotational element.

Moreover, at least one of the first, second and third rotational elements may be formed into a hollow shape. Specifically, the coupling device of the present invention is extremely useful when applied to the first, second and third rotational elements arranged coaxially with each other and at least one of which is formed into a hollow shape.

Then, the coupling device according to the present invention may further include: a first annular member secured to one of the first movable engaging element and the first drive unit; a first support member that is secured to the other of the first movable engaging element and the first drive unit and can rotatably support the first annular member; a second annular member secured to one of the connecting portion of the second movable engaging element and the second drive unit; and a second support member that is secured to the other of the connecting portion of the second movable engaging element and the second drive unit and can rotatably support the second annular member. Thus, the first drive unit can reliably move the first movable engaging element while allowing good rotation of the first movable engaging element that engages at least one of the first and third engaging portions and rotates, and the second drive unit can reliably move the second movable engaging element while allowing good rotation of the second movable engaging element that engages at least one of the second and third engaging portions and rotates.

The present invention is directed to a power output apparatus. In addition to the above-mentioned coupling device, the power output apparatus includes: a drive shaft; an internal combustion engine; a first electric motor that can input and output power; a second electric motor that can input and output power; and a power distribution and integration mechanism that includes a first element connected to a rotating shaft of the first electric motor, a second element connected to a rotating shaft of the second electric motor, and a third element connected to an engine shaft of the internal combustion engine, and is configured to allow differential rotation of the three elements, one of the first and second elements of the power distribution and integration mechanism being connected to the first rotational element of the coupling device, the other of the first and second elements of the power distribution and integration mechanism being connected to the second rotational element of the coupling device, the drive shaft being connected to the third rotational element of the coupling device.

The power output apparatus includes the coupling device, and can selectively output power from the first and second elements of the power distribution and integration mechanism to the drive shaft. Thus, in the power output apparatus, when the coupling device couples the first element of the power distribution and integration mechanism to the drive shaft, the first electric motor connected to the first element as an output element is allowed to function as an electric motor, and the second electric motor connected to the second element as a reaction element is allowed to function as a generator. When the coupling device couples the second element of the power distribution and integration mechanism to the drive shaft, the second electric motor connected to the second element as an output element is allowed to function as an electric motor, and the first electric motor connected to the first element as an reaction element is allowed to function as a generator. Thus, in the power output apparatus, the coupling device switches coupling states as appropriate, and thus a rotation speed of the second or first electric motor that functions as the generator is prevented from being a negative value when a rotation speed of the first or second electric motor that functions as the electric motor increases, thereby preventing so-called power circulation. In the power output apparatus, the coupling device couples both the first element and the second element of the power distribution and integration mechanism to the drive shaft, thereby allowing power from the engine to be mechanically (directly) transmitted to the drive shaft at a fixed speed ratio. Thus, with the power output apparatus, power transmission efficiency can be increased in a broader operation region. The coupling device can be configured to be simple and compact, and thus the power output apparatus including the coupling device can be also configured to be simple and compact. The first and second rotational elements of the coupling device may be connected to the first or second element of the power distribution and integration mechanism via a transmission unit or the like, and the third rotational element of the coupling device may be connected to the drive shaft via the transmission unit or the like.

The present invention is directed to a hybrid vehicle including the above-mentioned power output apparatus. The hybrid vehicle includes drive wheels driven by power from the drive shaft. The power output apparatus mounted in the hybrid vehicle is simple and compact and has high mountability, and can increase power transmission efficiency in a broader operation region, and thus the hybrid vehicle has increased fuel efficiency and drive performance.

The present invention is directed to an another coupling device that can selectively couple a first rotational element and a second rotational element arranged coaxially with each other to a third rotational element arranged coaxially with the first and second rotational elements. The coupling device includes: a first engaging portion provided in the first rotational element; a second engaging portion provided in the second rotational element so as to be spaced apart from the first engaging portion in an axial direction of the first, second and third rotational elements; a flange-like third engaging portion provided in the third rotational element so as to face the second engaging portion; a first movable engaging element that can engage with both the first engaging portion and the third engaging portion and is arranged movably in the axial direction; a first drive unit that moves the first movable engaging element in the axial direction; a second movable engaging element that is supported by the third rotational element slidably in the axial direction on the side opposite from the second engaging portion of the third engaging portion, and can engage with the second engaging portion through a hole portion formed in the third engaging portion; and a second drive unit that moves the second movable engaging element in the axial direction.

Also with this coupling device, one or both of the first and second rotational elements can be selectively coupled to the third rotational element. Further, the second movable engaging element that is supported by the third rotational element slidably in the axial direction on the side opposite from the second engaging portion of the third engaging portion, and can engage with the second engaging portion through the hole portion formed in the third engaging portion is used, and thus the first, second, and third engaging portions can be brought close to each other to particularly reduce the axial length of the coupling device, thereby providing a more compact coupling device. The coupling device includes a relatively small number of components, thereby providing a simpler overall configuration.

The present invention is also directed to an another coupling device that can selectively couple a first rotational element and a second rotational element arranged coaxially with each other to a third rotational element arranged coaxially with the first and second rotational elements. The coupling device includes: a first engaging portion provided in the first rotational element; a second engaging portion provided in the second rotational element so as to be spaced apart from the first engaging portion in an axial direction of the first, second and third rotational elements; a flange-like third engaging portion provided in the third rotational element so as to face the second engaging portion; a first movable engaging element that can engage with both the first engaging portion and the third engaging portion and is arranged movably in the axial direction; a first drive unit that moves the first movable engaging element in the axial direction; a second movable engaging element that is supported by the third rotational element slidably in the axial direction on the side closer to the second engaging portion than the third engaging portion, and can engage with the second engaging portion; and a second drive unit that is coupled to the second movable engaging element via a coupling member inserted into a hole portion formed in the third engaging portion, and moves the second movable engaging element in the axial direction.

Also with this coupling device, one or both of the first and second rotational elements can be selectively coupled to the third rotational element. Further, the second movable engaging element that is supported by the third rotational element slidably in the axial direction on the side closer to the second engaging portion than the third engaging portion, and can engage with the second engaging portion is used, the second movable engaging element and the second drive unit are coupled via the coupling member inserted into the hole portion formed in the third engaging portion, and thus the first, second and third engaging portions can be brought close to each other to particularly reduce the axial length of the coupling device, thereby providing a more compact coupling device. The coupling device includes a relatively small number of components, thereby providing a simpler overall configuration.

### Brief Description of the Drawings

Figure 1 is a schematic block diagram of a hybrid vehicle 20 according to an embodiment of the present invention;
Figure 2 is a sectional view of a clutch C1 included in a transmission 60 of the hybrid vehicle 20 of the embodiment;
Figure 3 is a sectional view taken along the line III-III in Figure 2;
Figure 4 illustrates relationships between rotation speeds and torque of main elements of a power distribution and integration mechanism 40 and the transmission 60 in changing a speed ratio of the transmission 60 in a shift-up direction with change in vehicle speed when the hybrid vehicle 20 of the embodiment is driven with an operation of an engine 22;
Figure 5 is an illustration similar to Figure 4;
Figure 6 is an illustration similar to Figure 4;
Figure 7 is an illustration similar to Figure 4;
Figure 8 illustrates an example of an alignment chart showing a relationship between a rotation speed and torque of each element of the power distribution and integration mechanism 40 and each element of a reduction gear mechanism 50 when a motor MG1 functions as a generator and a motor MG2 functions as an electric motor;
Figure 9 illustrates an example of an alignment chart showing a relationship between a rotation speed and torque of each element of the power distribution and integration mechanism 40 and each element of the reduction gear mechanism 50 when a motor MG2 functions as a generator and a motor MG1 functions as an electric motor;
Figure 10 illustrates a motor driving mode of the hybrid vehicle 20 of the embodiment;
Figure 11 is a sectional view of a clutch C1A according to a variant;
Figure 12 is a sectional view of a clutch C1B according to a variant;
Figure 13 is a schematic block diagram of a hybrid vehicle 20A according to a variant; and
Figure 14 is a schematic block diagram of a hybrid vehicle 20B according to a variant.

### Best Mode for Carrying Out the Invention

Next, the best mode for carrying out the invention will be described with an embodiment.

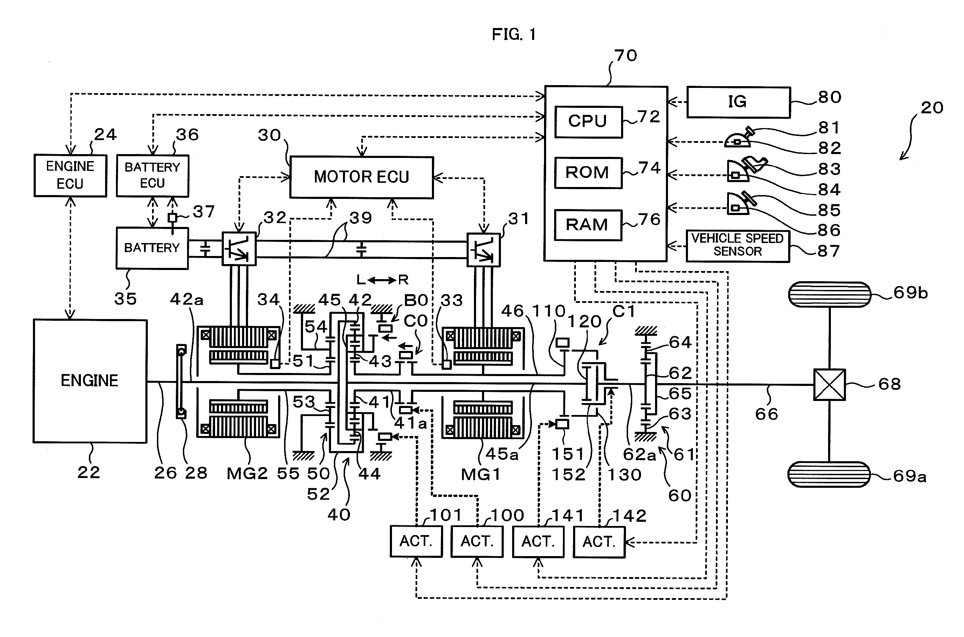

Figure 1 is a schematic block diagram of a hybrid vehicle 20 according to an embodiment of the present invention. The shown hybrid vehicle 20 is configured as a rear wheel driven vehicle, and includes an engine 22 placed in a front part of the vehicle, a power distribution and integration mechanism (differential rotational mechanism) 40 connected to a crankshaft 26 as an output shaft of the engine 22, a motor MG1 that is connected to the power distribution and integration mechanism 40 and can generate electric power, a motor MG2 that is arranged coaxially with the motor MG1 and connected to the power distribution and integration mechanism 40 via a reduction gear mechanism 50, and can generate electric power, a transmission 60 that can change the speed of power from the power distribution and integration mechanism 40 and transmit the power to a drive shaft 66, and a hybrid electronic control unit (hereinafter referred to as "hybrid ECU") 70 that controls the entire hybrid vehicle 20.

The engine 22 is an internal combustion engine that receives hydrocarbon fuel such as gasoline or gas oil and outputs power, and is controlled in fuel injection amount, ignition timing, intake air amount, or the like by an engine electronic control unit (hereinafter referred to as "engine ECU") 24. To the engine ECU 24, signals from various sensors that are provided in the engine 22 and detect an operation state of the engine 22 are inputted. The engine ECU 24 communicates with the hybrid ECU 70, controls the operation of the engine 22 on the basis of control signals from the hybrid ECU 70 and the signals from the sensors, and outputs data on the operation state of the engine 22 to the hybrid ECU 70.

The motor MG1 and the motor MG2 are each configured as a known synchronous motor generator that operates as a generator and can also operate as an electric motor, and supply and receive electric power to and from a battery 35 that is a secondary battery through inverters 31 and 32. Power lines 39 connecting the inverters 31 and 32 and the battery 35 are configured as a positive electrode bus line and a negative electrode bus line shared by the inverters 31 and 32, and electric power generated by one of the motors MG1 and MG2 can be consumed by the other. Thus, the battery 35 is charged and discharged with electric power generated from one of the motors MG1 and MG2 or insufficient electric power. If an electric power balance is achieved by the motors MG1 and MG2, the battery 35 is not charged and discharged. Both of the motors MG1 and MG2 are driven and controlled by a motor electronic control unit (hereinafter referred to as "motor ECU") 30. To the motor ECU 30, signals required for driving and controlling the motors MG1 and MG2 such as signals from rotational position detection sensors 33 and 34 that detect rotational positions of rotors of the motors MG1 and MG2 or phase currents applied to the motors MG1 and MG2 detected by an unshown current sensor are inputted, and from the motor ECU 30, switching control signals to the inverters 31 and 32 and the like are outputted. The motor ECU 30 performs an unshown rotation speed calculation routine on the basis of the signals inputted from the rotational position detection sensors 33 and 34, and calculates rotation speeds Nm1 and Nm2 of the rotors of the motors MG1 and MG2. The motor ECU 30 communicates with the hybrid ECU 70, drives and controls the motors MG1 and MG2 on the basis of the control signals from the hybrid ECU 70 and the like and outputs data on operation states of the motors MG1 and MG2 to the hybrid ECU 70 as required.

The battery 35 is controlled by a battery electronic control unit (hereinafter referred to as "battery ECU") 36. To the battery ECU 36, signals required for controlling the battery 35, for example, an inter-terminal voltage from an unshown voltage sensor provided between terminals of the battery 35, charge and discharge currents from an unshown current sensor mounted to the power line 39 connected to an output terminal of the battery 35, and a battery temperature Tb from a temperature sensor 37 mounted to the battery 35 are inputted. The battery ECU 36 outputs data on a state of the battery 35 to the hybrid ECU 70 and the engine ECU 24 by communication as required. Further, the battery ECU 36 also calculates a state of charge SOC on the basis of an integrated value of the charge and discharge currents detected by the current sensor for controlling the battery 35.

The power distribution and integration mechanism 40 is housed in an unshown transmission case together with the motors MG1 and MG2, the reduction gear mechanism 50, and the transmission 60, and arranged coaxially with the crankshaft 26 at a predetermined distance from the engine 22. The power distribution and integration mechanism 40 in the embodiment is a double pinion type planetary gear mechanism that includes a sun gear 41 as an external gear, a ring gear 42 as an internal gear arranged concentrically with the sun gear 41, and a carrier 45 that rotatably and revolvably holds at least a pair of pinion gears 43 and 44 that mesh with each other and one of which meshes with the sun gear 41 and the other meshes with the ring gear 42, and is configured to allow differential rotation of the sun gear 41 (second element), the ring gear 42 (third element), and the carrier 45 (first element). In the embodiment, the power distribution and integration mechanism 40 is configured so that a gear ratio p (a value of the number of teeth of the sun gear 41 divided by the number of teeth of the ring gear 42) is p < 0.5. To the sun gear 41 as the second element of the power distribution and integration mechanism 40, the motor MG1 (hollow rotor) as an second electric motor is connected via a hollow sun gear shaft 41a and a hollow first motor shaft 46 that extend from the sun gear 41 toward the side opposite from the engine 22 (rearward of the vehicle) and constitute a series of hollow shafts. To the carrier 45 as the first element, the motor MG2 (hollow rotor) as a first electric motor is connected via the reduction gear mechanism 50 placed between the power distribution and integration mechanism 40 and the engine 22 and a hollow second motor shaft (second shaft) 55 extending from the reduction gear mechanism 50 (sun gear 51) toward the engine 22. Further, to the ring gear 42 as the third element, the crankshaft 26 of the engine 22 is connected via a ring gear shaft 42a extending through the second motor shaft 55 and the motor MG2, and a damper 28.

The reduction gear mechanism 50 is a single pinion type planetary gear mechanism that includes a sun gear 51 as an external gear, a ring gear 52 as an internal gear arranged concentrically with the sun gear 51, a plurality of pinion gears 53 that mesh with both the sun gear 51 and the ring gear 52, and a carrier 54 that rotatably and revolvably holds the plurality of pinion gears 53. In the embodiment, the reduction gear mechanism 50 is configured so that a reduction gear ratio (the number of teeth of the sun gear 51 / the number of teeth of the ring gear 52) is a value near ρ/(1-ρ), were p is the gear ratio of the power distribution and integration mechanism 40. The sun gear 51 of the reduction gear mechanism 50 is connected to the rotor of the motor MG2 via the second motor shaft 55. The ring gear 52 of the reduction gear mechanism 50 is secured to the carrier 45 of the power distribution and integration mechanism 40, and thus the reduction gear mechanism 50 is substantially integrated with the power distribution and integration mechanism 40. The carrier 54 of the reduction gear mechanism 50 is secured to the transmission case. Thus, by the operation of the reduction gear mechanism 50, power from the motor MG2 is reduced in speed and inputted to the carrier 45 of the power distribution and integration mechanism 40, and power from the carrier 45 is increased in speed and inputted to the motor MG2. As in the embodiment, the reduction gear mechanism 50 is placed between the motor MG2 and the power distribution and integration mechanism 40 and integrated with the power distribution and integration mechanism 40, thereby providing a more compact power output apparatus.

As shown in Figure 1, a clutch C0 (connection and disconnection unit) for connecting the sun gear shaft 41a and the first motor shaft 46 and disconnecting the sun gear shaft 41a from the first motor shaft 46 is provided between the sun gear shaft 41a and the first motor shaft 46. In the embodiment, the clutch C0 is configured as a dog clutch that can couple a dog secured to a tip of the sun gear shaft 41a via an engaging member driven by, for example, an electric, electromagnetic or hydraulic actuator 100 and a dog secured to a tip of the first motor shaft 46 with low loss, and uncouple the dogs. When the connection between the sun gear shaft 41a and the first motor shaft 46 by the clutch C0 is released, the connection between motor MG1 as the second electric motor and the sun gear 41 as the second element of the power distribution and integration mechanism 40 is released, and the engine 22 can be substantially separated from the motors MG1 and MG2 and the transmission 60 by the function of the power distribution and integration mechanism 40. Further, near the power distribution and integration mechanism 40, a brake B0 is provided that functions as a securing unit that can non-rotatably secure a second motor shaft 55 as a rotating shaft of the motor MG2. In the embodiment, the brake B0 is configured as a dog clutch that can couple a dog secured to the carrier 45 via an engaging member driven by, for example, an electric, electromagnetic or hydraulic actuator 101 and a securing dog secured to the transmission case with lower loss and uncouple the dogs. When the brake B0 couples the dog on the carrier 45 and the securing dog on the transmission case, the carrier 45 becomes non-rotatable, and thus the sun gear 51 of the reduction gear mechanism 50 and the second motor shaft 55 (motor MG2) can be non-rotatably secured by the function of the power distribution and integration mechanism 40.

The first motor shaft 46 that can be coupled to the sun gear 41 of the power distribution and integration mechanism 40 via the clutch C0 further extends from the motor MG1 toward the side opposite from the engine 22 (rearward of the vehicle), and can be connected to the transmission 60. From the carrier 45 of the power distribution and integration mechanism 40, a carrier shaft (coupling shaft) 45a extends through the hollow sun gear shaft 41a and first motor shaft 46 toward the side opposite from the engine 22 (rearward of the vehicle), and the carrier shaft 45a can be also connected to the transmission 60. Thus, in the embodiment, the power distribution and integration mechanism 40 is arranged coaxially with the motors MG1 and MG2 between the motor MG1 and the motor MG2 arranged coaxially with each other, and the engine 22 is arranged coaxially with the motor MG2 and faces the transmission 60 with the power distribution and integration mechanism 40 therebetween. Specifically, in the embodiment, components of the power output apparatus such as the engine 22, the motors MG1 and MG2, the power distribution and integration mechanism 40, and the transmission 60 are substantially coaxially arranged in the order of the engine 22, the motor MG2, (the reduction gear mechanism 50), the power distribution and integration mechanism 40, the motor MG1, and the transmission 60 from the front of the vehicle. Thus, the power output apparatus can be configured to be compact, have high mountability, and be suitable for the hybrid vehicle 20 that runs by mainly driving rear wheels.

The transmission 60 includes a change speed differential rotation mechanism 61 that is a single pinion type planetary gear mechanism (reduction mechanism) that can reduce the speed of the inputted power at a predetermined reduction gear ratio and output the power, and a clutch C1 as a coupling device of the present invention. The change speed differential rotation mechanism 61 includes a sun gear 62 as an input element, a ring gear 63 as a securing element arranged concentrically with the sun gear 62, and a carrier 65 as an output element holding a plurality of pinion gears 64 that mesh with both the sun gear 62 and the ring gear 63, and is configured to allow differential rotation of the sun gear 62, the ring gear 63, and the carrier 65. The ring gear 63 of the change speed differential rotation mechanism 61 is non-rotatably secured to the transmission case as shown in Figure 1. To the carrier 65 of the change speed differential rotation mechanism 61, a drive shaft 66 extending rearward of the vehicle is connected, and the drive shaft 66 is coupled to rear wheels 69a and 69b as drive wheels via a differential gear 68.

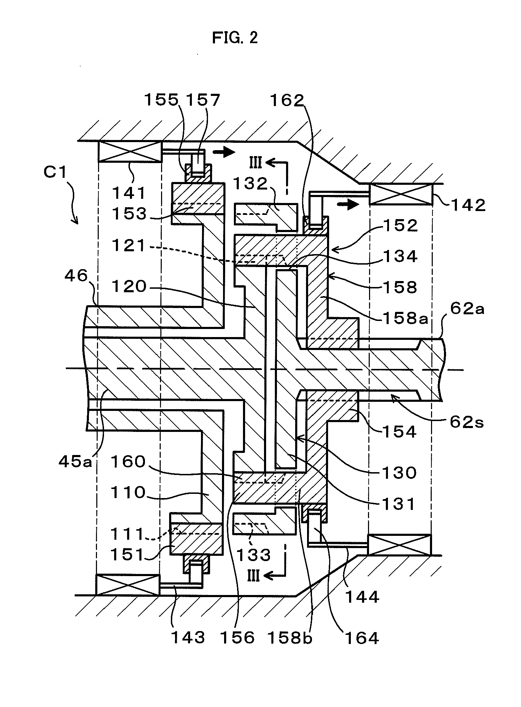

As shown in Figures 1 and 2, the clutch C1 can selectively couple one or both of the hollow first motor shaft (first rotational element) 46 connected to the sun gear 41 as the second element of the power distribution and integration mechanism 40 and the carrier shaft (second rotational element) 45a extending from the carrier 45 as the first element through the first motor shaft 46 to the sun gear shaft (third rotational element) 62a extending from the sun gear 62 of the change speed differential rotation mechanism 61 forward of the vehicle. In the embodiment, the clutch C1 is configured as a so-called dog clutch including a first engaging portion 110 formed at one end (right end in the drawing) of the first motor shaft 46, a second engaging portion 120 formed at one end (right end in the drawing) of the carrier shaft 45a, a third engaging portion 130 formed at one end (left end in the drawing) of the sun gear shaft 62a, a first movable engaging member 151 that can engage with both the first engaging portion 110 and the third engaging portion 130 and is placed movably in the axial direction of the first motor shaft 46, the carrier shaft 45a, and the sun gear shaft 62a, a first actuator 141 that moves the first movable engaging member 151 in the axial direction, a second movable engaging member 152 that can engage with both the second engaging portion 120 and the third engaging portion 130 and is placed movably in the axial direction, and a second actuator 142 that moves the second movable engaging member 152 in the axial direction. The first and second actuators 141 and 142 are electric, electromagnetic or hydraulic actuators that are formed into an annular shape and can move annular drive members 143 and 144 forward and backward in the axial direction of the first motor shaft 46 or the like, and secured to an inner peripheral surface of the transmission case.

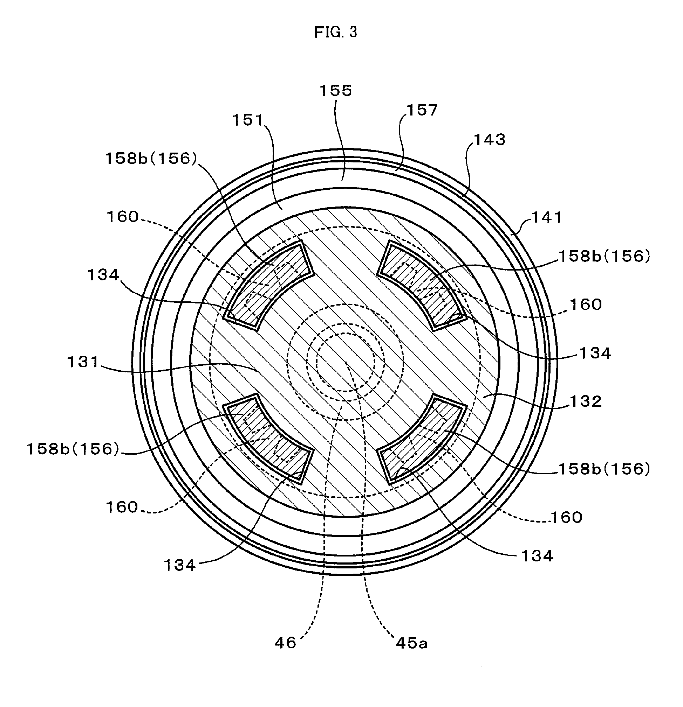

The first engaging portion 110 is, as shown in Figure 2, a flange-like portion extending radially and outwardly from an end of the first motor shaft 46 as the first rotational element, and a spline (groove) 111 is formed in an outer periphery thereof. The second engaging portion 120 is a flange-like portion extending radially and outwardly from an end of the carrier shaft 45a as the second rotational element projecting from the end of the hollow first motor shaft 46, and is located rearward of the vehicle from the first engaging portion 110 of the first motor shaft 46. Specifically, the second engaging portion 120 is provided in the carrier shaft 45a so as to be spaced apart from the first engaging portion 110 in the axial direction of the first motor shaft 46, the carrier shaft 45a, and the sun gear shaft 62a. In the embodiment, the second engaging portion 120 has a smaller diameter than the first engaging portion 110, and a spline (groove) 121 formed in an outer periphery thereof. Further, the third engaging portion 130 includes a flange portion 131 extending radially and outwardly from one end (left end in the drawing) of the sun gear shaft 62a, and a cylindrical portion 132 extending from an outer peripheral portion of the flange portion 131 forward of the vehicle (left end in the drawing). In the embodiment, the flange portion 131 has substantially the same outer diameter as the first engaging portion 110, and faces the second engaging portion 120 of the carrier shaft 45a with a predetermined space therebetween. In the flange portion 131 of the third engaging portion 130, as shown in Figures 2 and 3, a plurality of (four in the embodiment) hole portions 134 are formed circumferentially at predetermined intervals. In the embodiment, the cylindrical portion 132 of the third engaging portion 130 extends from the flange portion 131 so as to surround the outer periphery of the second engaging portion 120 of the carrier shaft 45a, and a spline (groove) 133 is formed correspondingly to the spline 111 in the first engaging portion 110 in an outer peripheral surface of a tip of the cylindrical portion 132.

The first movable engaging member 151 is formed as an annular short sleeve having, on an inner peripheral surface thereof, a tooth portion (dog) 153 that can engage with both the spline 111 in the first engaging portion 110 and the spline 133 formed in the cylindrical portion 132 of the third engaging portion 130. To an outer peripheral surface of the first movable engaging member 151, an annular support member 155 that can rotatably hold an annular coupling ring 157 is secured. The coupling ring 157 held by the support member 155 is secured to a tip of the drive member 143 of the first actuator 141 secured to the inner peripheral surface of the transmission case. In the embodiment, the first movable engaging member 151 is supported by the first engaging portion 110 slidably in the axial direction, and the first actuator 141 moves the first movable engaging member 151 in the arrow direction (toward the third engaging portion 130) in Figure 2 to allow the tooth portion 153 of the first movable engaging member 151 to engage with the spline 133 formed in the cylindrical portion 132 of the third engaging portion 130 while engaging with the spline 111 in the first engaging portion 110. In this state, the first movable engaging member 151 is moved in the opposite direction to allow the first movable engaging member 151 to be disengaged from the third engaging portion 130.

On the other hand, the second movable engaging member 152 includes, as shown in Figure 2, a sliding portion 154 supported by the sun gear shaft 62a slidably in the axial direction, an engaging portion 156 that can engage with the second engaging portion 120 on the side closer to the carrier shaft 45a than the flange portion 131 of the third engaging portion 130 (left side in the drawing), and a connecting portion 158 connecting the sliding portion 154 and the engaging portion 156. The sliding portion 154 of the second movable engaging member 152 is formed to be engageable with a spline 62s formed in an outer peripheral surface of the sun gear shaft 62a so as to be located on the side opposite from the second engaging portion 120 of the third engaging portion 130, that is, rearward of the vehicle from the flange portion 131 of the third engaging portion 130 (right side in the drawing), and slidably supported by the sun gear shaft 62a. In the embodiment, the connecting portion 158 of the second movable engaging member 152 includes a flange portion 158a integrated with the sliding portion 154 and radially extending, and a plurality of (four in the embodiment) projecting pieces 158b extending from the flange portion 158a toward the second engaging portion 120 (leftward in the drawing). The projecting pieces 158b of the connecting portion 158 are insertion portions that are inserted into the plurality of hole portions 134, respectively, formed in the flange portion 131 of the third engaging portion 130, and can project toward the second engaging portion 120, and in an inner periphery of a free end of each projecting piece 158b, a tooth portion (dog) 160 that can engage with the spline 121 in the second engaging portion 120 is formed. Specifically, the free end of each projecting piece 158b constitutes the engaging portion 156 that can engage with the second engaging portion 120 on the side closer to the carrier shaft 45a than the flange portion 131 of the third engaging portion 130 (left side in the drawing). To the flange portion 158a of the connecting portion 158 located rearward of the vehicle from the flange portion 131 of the third engaging portion 130 (right side in the drawing), an annular support member 162 that can rotatably hold an annular coupling ring 164 is secured. The coupling ring 164 held by the support member 162 is secured to a tip of the drive member 144 of the second actuator 142 secured to the inner peripheral surface of the transmission case. Thus, the second actuator 142 moves the second movable engaging member 152 supported by the sun gear shaft 62a slidably in the axial direction toward the carrier shaft 45a (leftward in the drawing) to allow the tooth portion 160 of the engaging portion 156 to engage with the spline 121 formed in the outer peripheral portion of the second engaging portion 120. In this case, the second movable engaging member 152 is moved in the arrow direction in the drawing to allow the second movable engaging member 152 to be disengaged from the second engaging portion 120.

With the clutch C1 configured as described above, the first actuator 141 moves the first movable engaging member 151 in the arrow direction in Figure 2 to engage the first engaging portion 110, thereby coupling the first motor shaft 46 and the sun gear shaft 62a of the change speed differential rotation mechanism 61 with lower loss. Thus, if the clutch C0 is engaged, the sun gear 41 as the second element of the power distribution and integration mechanism 40 and the drive shaft 66 are coupled via the sun gear shaft 41a, the first motor shaft 46, and the change speed differential rotation mechanism 61 (such a coupling state by the clutch C1 is hereinafter referred to as "sun gear coupling state"). In the sun gear coupling state, the second actuator 142 moves the second movable engaging member 152 as shown in Figure 2 to engage with the second engaging portion 120, thereby coupling the carrier shaft 45a and the sun gear shaft 62a of the change speed differential rotation mechanism 61 with lower loss. Thus, both the first motor shaft 46 and the carrier shaft 45a, that is, both the sun gear 41 of the power distribution and integration mechanism 40 and the carrier 45 are coupled to the drive shaft 66 via the change speed differential rotation mechanism 61 (such a coupling state by the clutch C1 is hereinafter referred to as "both elements coupling state"). Further, in the both elements coupling state, the first actuator 141 moves the first movable engaging member 151 as shown in Figure 2 to disengage the first movable engaging member 151 from the first engaging portion 110, thereby coupling only the carrier 45 of the power distribution and integration mechanism 40 to the drive shaft 66 via the carrier shaft 45a and the change speed differential rotation mechanism 61 (such a coupling state by the clutch C1 is hereinafter referred to as "carrier coupling state"). As such, with the clutch C1 as the coupling device of the present invention, one or both of the first motor shaft (first rotational element) 46 and the carrier shaft (second rotational element) 45a can be selectively coupled to the sun gear shaft (third rotational element) 62a of the change speed differential rotation mechanism 61.

The hybrid ECU 70 is configured as a microprocessor mainly including a CPU 72, a ROM 74 that stores a processing program, a RAM 76 that temporarily stores data, and unshown input and output ports and communication ports. To the hybrid ECU 70, an ignition signal from an ignition switch (start switch) 80, a shift position SP from a shift position sensor 82 that detects a shift position SP that is an operation position of a shift lever 81, an accelerator opening Acc from an accelerator pedal position sensor 84 that detects a depression amount of an accelerator pedal 83, a brake pedal position BP from a brake pedal position sensor 86 that detects a depression amount of a brake pedal 85, and a vehicle speed V from a vehicle speed sensor 87 are inputted via an input port. As described above, the hybrid ECU 70 is connected to the engine ECU 24, the motor ECU 30, and the battery ECU 36 via the communication ports, and transmits and receives various control signals and data to and from the engine ECU 24, the motor ECU 30, and the battery ECU 36. The actuators 100 and 101 that drive the clutch C0 and the brake B0, and the first and second actuators 141 and 142 that drive the first and second movable engaging members 151 and 152 of the clutch C1 of the transmission 60 are also controlled by the hybrid ECU 70.

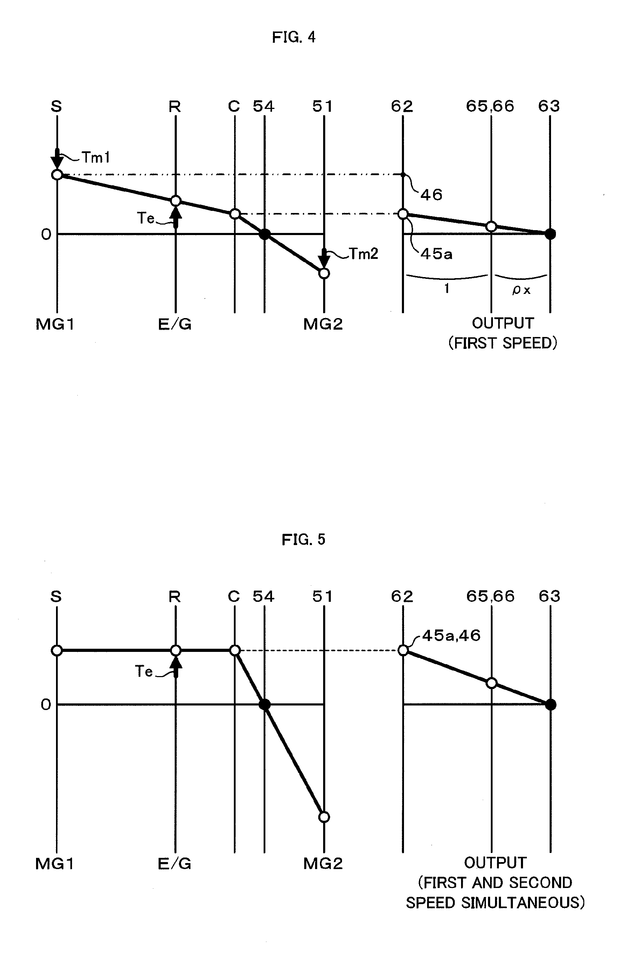

Next, operations of the hybrid vehicle 20 of the embodiment will be described with reference to Figures 4 to 10. Figures 4 to 7 illustrate relationships between rotation speeds and torque of main elements of the power distribution and integration mechanism 40 and the transmission 60 in changing a speed ratio of the transmission 60 in a shift-up direction with change in vehicle speed when the hybrid vehicle 20 is driven with the operation of the engine 22. When the hybrid vehicle 20 runs in the states in Figures 4 to 7, under collective control by the hybrid ECU 70 on the basis of the depression amount of the accelerator pedal 83 and the vehicle speed V, the engine ECU 24 controls the engine 22 and the motor ECU 30 controls the motors MG1 and MG2, and the hybrid ECU 70 directly controls the actuators 100, 101, 141 and 142 (the clutch C0, the brake B0, and the clutch C1 of the transmission 60). In Figures 4 to 10, an S-axis represents the rotation speed of the sun gear 41 of the power distribution and integration mechanism 40 (the rotation speed Nm1 of the motor MG1, that is, the first motor shaft 46), an R-axis represents the rotation speed of the ring gear 42 of the power distribution and integration mechanism 40 (rotation speed Ne of the engine 22), a C-axis represents the rotation speed of the carrier 45 of the power distribution and integration mechanism 40 (rotation speed of the carrier shaft 45a and the ring gear 52 of the reduction gear mechanism 50), a 54-axis represents the rotation speed of the carrier 54 of the reduction gear mechanism 50, and a 51-axis represents the rotation speed of the sun gear 51 of the reduction gear mechanism 50 (the rotation speed Nm2 of the motor MG2, that is, the second motor shaft 55). A 62-axis represents the rotation speed of the sun gear 62 of the change speed differential rotation mechanism 61 of the transmission 60, a 65-axis and a 66-axis represent the rotation speeds of the carrier 65 of the change speed differential rotation mechanism 61 and the drive shaft 66, and a 63-axis represents the rotation speed of the ring gear 63 of the change speed differential rotation mechanism 61.

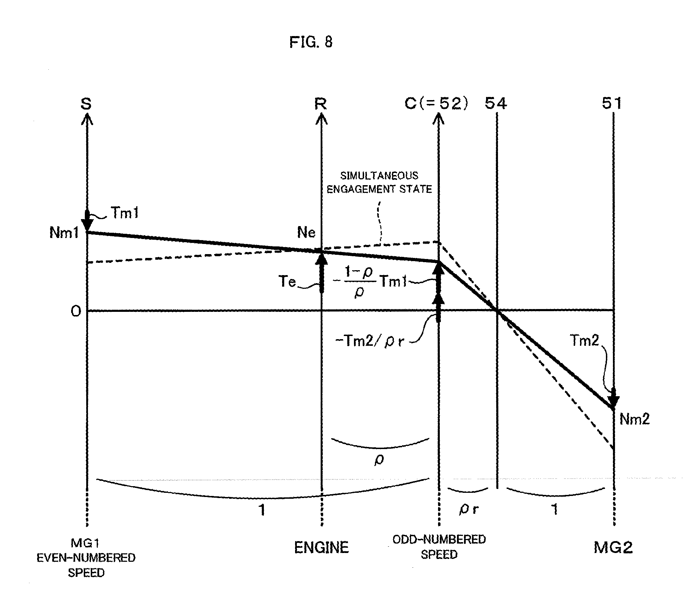

When the hybrid vehicle 20 is driven with the operation of the engine 22, basically, the brake B0 is not operated (turned off) and the clutch C0 is engaged, and the motor MG1, that is, the first motor shaft 46 is connected to the sun gear 41 of the power distribution and integration mechanism 40 via the sun gear shaft 41a. When the vehicle speed V of the hybrid vehicle 20 is relatively low, the clutch C1 of the transmission 60 is set to the carrier coupling state in which the first movable engaging member 151 is disengaged from the first engaging portion 110 and the second movable engaging member 152 engages with the second engaging portion 120. This state is hereinafter referred to as "first speed state (1st speed)" of the transmission 60 (Figure 4). In the first speed state, the carrier 45 as the first element of the power distribution and integration mechanism 40 is coupled to the drive shaft 66 via the carrier shaft 45a, the clutch C1, and the change speed differential rotation mechanism 61. Thus, in the first speed state, the motors MG1 and MG2 can be driven and controlled so that the carrier 45 of the power distribution and integration mechanism 40 is an output element, the motor MG2 connected to the carrier 45 via the reduction gear mechanism 50 functions as an electric motor, and the motor MG1 connected to the sun gear 41 as a reaction element functions as a generator. In this case, the power distribution and integration mechanism 40 distributes power from the engine 22 inputted via the ring gear 42 to the sun gear 41 and the carrier 45 according the gear ratio p, and integrates power from the engine 22 and power from the motor MG2 that functions as the electric motor and outputs the power to the carrier 45. Such a mode in which the motor MG1 functions as the generator and the motor MG2 functions as the electric motor is hereinafter referred to as "first torque conversion mode". Figure 8 illustrates an example of an alignment chart showing a relationship between a rotation speed and torque of each element of the power distribution and integration mechanism 40 and each element of the reduction gear mechanism 50 in the first torque conversion mode. In Figure 8, an S-axis, an R-axis, a C-axis, a 54-axis and a 51-axis represent the same as in Figures 4 to 7, p represents the gear ratio of the power distribution and integration mechanism 40, and pr represents the reduction gear ratio of the reduction gear mechanism 50. In Figure 8, the bold arrow indicates torque applied to each element, and the arrow pointing upward in the drawing represents a positive value of torque, and the arrow pointing downward represents a negative value of torque (the same applies to Figures 4 to 7, 9 and 10). In the first torque conversion mode, the power from the engine 22 is torque-converted by the power distribution and integration mechanism 40 and the motors MG1 and MG2 and outputted to the carrier 45, and the rotation speed of the motor MG1 can be controlled to steplessly and continuously change the ratio between the rotation speed of the engine 22 and the rotation speed of the carrier 45 as the output element. The power outputted to the carrier 45 is transmitted to the sun gear 62 of the change speed differential rotation mechanism 61 via the carrier shaft 45a and the clutch C1, and changed in speed (reduced in speed) at the speed ratio (ρx/(1+ρx)) based on the gear ratio px (see Figure 4) of the change speed differential rotation mechanism 61 and outputted to the drive shaft 66.

When the vehicle speed V of the hybrid vehicle 20 increases in the state in Figure 4, that is, the state in which the transmission 60 is in the first speed state and the torque conversion mode is the first torque conversion mode, the rotation speed of the carrier 45 of the power distribution and integration mechanism 40 substantially matches the rotation speed of the sun gear 41 in due course. Thus, the first actuator 141 of the clutch C1 allows the first movable engaging member 151 to engage the first engaging portion 110 to set the clutch C1 to the both elements coupling state with the second movable engaging member 152 engaging with the second engaging portion 120, and both the carrier 45 of the power distribution and integration mechanism 40 and the sun gear 41 can be coupled to the change speed differential rotation mechanism 61. In this state, a torque command to the motors MG1 and MG2 is set to zero, thus as shown in Figure 5, the motors MG1 and MG2 idle without power operation and regenerative operation, and the power (torque) from the engine 22 is mechanically (directly) transmitted to the drive shaft 66 at a fixed (constant) speed ratio (speed ratio based on the gear ratio px of the change speed differential rotation mechanism 61) without conversion into electric energy. Such a mode in which the clutch C1 couples both the carrier 45 of the power distribution and integration mechanism 40 and the sun gear 41 to the change speed differential rotation mechanism 61 is hereinafter referred to as "simultaneous engagement mode", and the state shown in Figure 5 is particularly referred to as "first and second speed simultaneous engagement state".

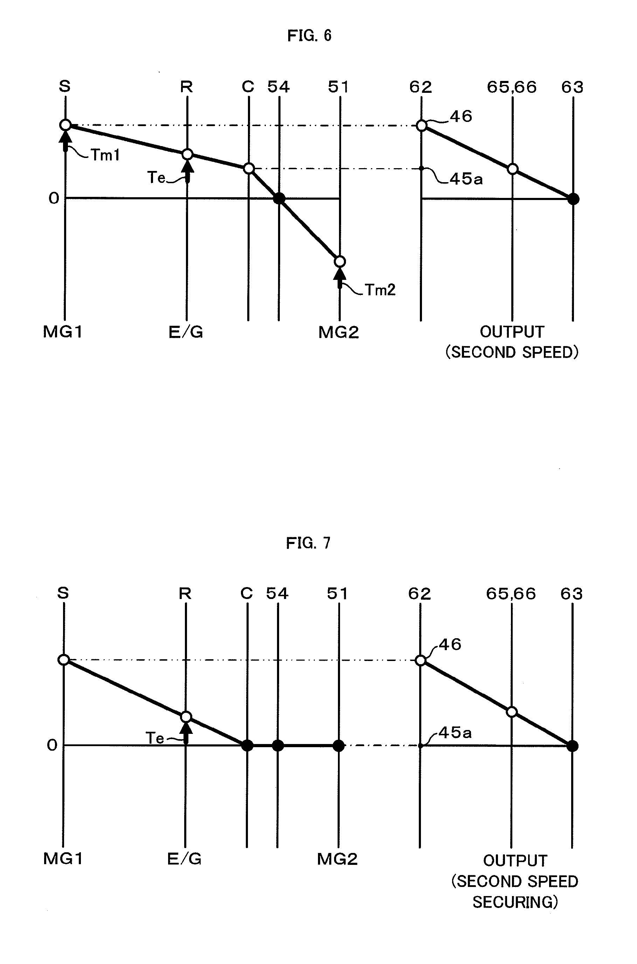

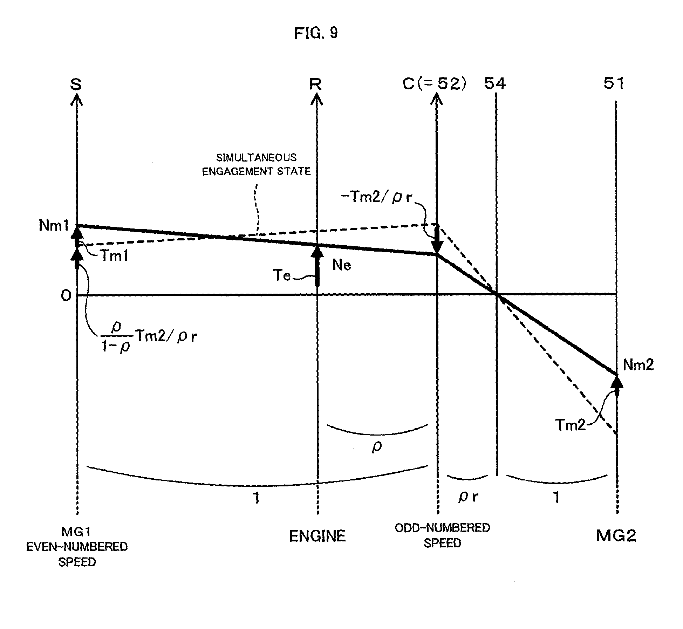

In the first and second speed simultaneous engagement state in Figure 5, the rotation speed of the carrier shaft 45a matches the rotation speed of the first motor shaft 46, and thus the first movable engaging member 151 can be easily disengaged from the first engaging portion 110 to set the clutch C1 to the sun gear coupling state and uncouple the carrier shaft 45a from the change speed differential rotation mechanism 61. Such a state in which the clutch C1 is set to the sun gear coupling state is hereinafter referred to as a second speed state (2nd speed) of the transmission 60 (Figure 6). In the second speed state, the sun gear 41 as the second element of the power distribution and integration mechanism 40 is coupled to the drive shaft 66 via the sun gear shaft 41a, the first motor shaft 46, the clutch C1, and the change speed differential rotation mechanism 61. Thus, in the second speed state, the motors MG1 and MG2 can be driven and controlled so that the sun gear 41 of the power distribution and integration mechanism 40 is an output element, the motor MG1 connected to the sun gear 41 functions as an electric motor, and the motor MG2 connected to the carrier 45 as a reaction element functions as a generator. In this case, the power distribution and integration mechanism 40 distributes power from the engine 22 inputted via the ring gear 42 to the sun gear 41 and the carrier 45 according the gear ratio p, and integrates the power from the engine 22 and the power from the motor MG1 that functions as the electric motor and outputs the power to the sun gear 41. Such a mode in which the motor MG2 functions as the generator and the motor MG1 functions as the electric motor is hereinafter referred to as "second torque conversion mode". Figure 9 illustrates an example of an alignment chart showing a relationship between a rotation speed and torque of each element of the power distribution and integration mechanism 40 and each element of the reduction gear mechanism 50 in the second torque conversion mode. Reference numerals in Figure 9 are the same as those in Figure 8. In the second torque conversion mode, the power from the engine 22 is torque-converted by the power distribution and integration mechanism 40 and the motors MG1 and MG2 and outputted to the sun gear 41, and the rotation speed of the motor MG2 can be controlled to steplessly and continuously change the ratio between the rotation speed of the engine 22 and the rotation speed of the sun gear 41 as the output element. The power outputted to the sun gear 41 is transmitted to the sun gear 62 of the change speed differential rotation mechanism 61 via the sun gear shaft 41a, the first motor shaft 46, and the clutch C1, and changed in speed (reduced in speed) at the speed ratio (ρx/(1+ρx)) based on the gear ratio px of the change speed differential rotation mechanism 61 and outputted to the drive shaft 66.

When the vehicle speed V of the hybrid vehicle 20 increases in the state in Figure 6, that is, the state where the transmission 60 is in the second speed state and the torque conversion mode is the second torque conversion mode, the rotation speeds of the motor MG2, the second motor shaft 55, and the carrier 45 as the first element of the power distribution and integration mechanism 40 approach zero in due course. Thus, the brake B0 can be operated (turned on) to non-rotatably secure the second motor shaft 55 (motor MG2) and the carrier 45. Then, the torque command to the motors MG1 and MG2 is set to zero in the state in which the brake B0 non-rotatably secures the second motor shaft 55 and the carrier 45 with the clutch C1 coupling the first motor shaft 46 to the change speed differential rotation mechanism 61, thus the motors MG1 and MG2 idle without power operation and regenerative operation, and the power (torque) from the engine 22 is changed in speed at a fixed (constant) speed ratio (speed ratio based on the gear ratio p of the power distribution and integration mechanism 40 and the gear ratio px of the change speed differential rotation mechanism 61) and directly transmitted to the drive shaft 66 without conversion into electric energy as shown in Figure 7. Such a mode in which the clutch C0 is engaged, and the brake B0 non-rotatably secures the second motor shaft 55 and the carrier 45 with the clutch C1 of the transmission 60 coupling the first motor shaft 46 to the change speed differential rotation mechanism 61 is also hereinafter referred to as "simultaneous engagement mode", and the state shown in Figure 7 is particularly referred to as "second speed securing state". When the speed ratio of the transmission 60 is changed in a shift-down direction, it is only necessary that the above described procedure is basically performed in reverse order.

As such, in the hybrid vehicle 20 of the embodiment, the first torque conversion mode and the second torque conversion mode are alternately switched with switching between the first and second speed state s of the transmission 60. Thus, the rotation speed Nm1 or Nm2 of the motor MG1 or MG2 that functions as the generator can be prevented from being a negative value when the rotation speed Nm2 or Nm1 of the motor MG2 or MG1 that functions as the electric motor increases. Thus, in the hybrid vehicle 20, power circulation in which the motor MG2 generates electric power using part of the power outputted to the carrier 45 as the rotation speed of the motor MG1 becomes negative, and the electric power generated by the motor MG2 is consumed by the motor MG1 to output power in the first torque conversion mode, or power circulation in which the motor MG1 generates electric power using part of the power outputted to the sun gear 41 as the rotation speed of the motor MG2 becomes negative, and the electric power generated by the motor MG1 is consumed by the motor MG2 to output power in the second torque conversion mode can be prevented, thereby increasing power transmission efficiency in a broader operation region. Preventing the power circulation can reduce the maximum rotation speeds of the motors MG1 and MG2, thereby reducing the sizes of the motors MG1 and MG2. Further, the hybrid vehicle 20 is driven in the simultaneous engagement mode, and thus the power from the engine 22 can be mechanically (directly) transmitted to the drive shaft 66 at the fixed speed ratio. Thus, the opportunity to mechanically output the power from the engine 22 to the drive shaft 66 without conversion into electric energy can be increased to further increase power transmission efficiency in a broader operation region. Generally, in a power output apparatus using an engine, two electric motors, and a power distribution and integration mechanism such as a planetary gear mechanism, a larger amount of power from the engine is converted into electric energy when a reduction gear ratio between the engine and the drive shaft is relatively high, thereby reducing power transmission efficiency and causing heat generation from motors MG1 and MG2. Thus, the simultaneous engagement mode is particularly advantageous when the reduction gear ratio between the engine 22 and the drive shaft is relatively high. Further, in the hybrid vehicle 20 of the embodiment, the simultaneous engagement mode is once performed between the first torque conversion mode and the second torque conversion mode in changing the speed state of the transmission 60, thereby preventing so-called torque loss in changing the speed state, and allowing extremely smooth and shockless change in the speed state, that is, switching between the first torque conversion mode and the second torque conversion mode.

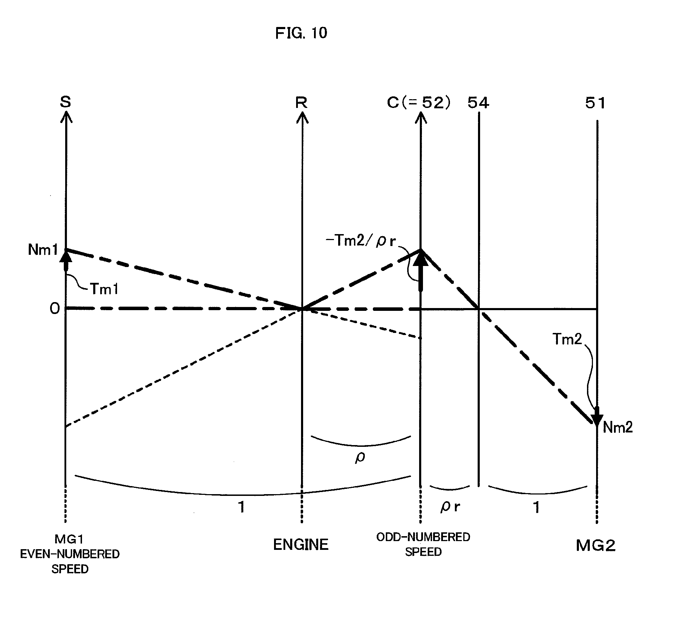

Next, with reference to Figure 10, an outline of a motor driving mode will be described in which electric power from the battery 35 is used to cause the motor MG1 and the motor MG2 to output power with the engine 22 stopped to thereby drive the hybrid vehicle 20. In the hybrid vehicle 20 of the embodiment, the motor driving mode mainly includes a clutch engagement one motor driving mode in which the clutch C0 is engaged to connect the motor MG1 to the sun gear 41 of the power distribution and integration mechanism 40, and one of the motors MG1 and MG2 is caused to output power, a clutch disengagement one motor driving mode in which the connection between the motor MG1 and the sun gear 41 of the power distribution and integration mechanism 40 by the clutch C0 is released, and one of the motors MG1 and MG2 is caused to output power, and a two motor driving mode in which the connection between the motor MG1 and the sun gear 41 of the power distribution and integration mechanism 40 by the clutch C0 is released, and power from both the motors MG1 and MG2 can be used. When the motor driving mode is selected, the brake B0 is not operated.

In performing the clutch engagement one motor driving mode, the clutch C0 is engaged, and the clutch C1 is set to the carrier coupling state to set the transmission 60 to the first speed state, thereby causing only the motor MG2 to output power, or the clutch C0 is engaged, and the clutch C1 is set to the sun gear coupling state to set the transmission 60 to the second speed state, thereby causing only the motor MG1 to output power. In the clutch engagement one motor driving mode, the clutch C0 connects the sun gear 41 of the power distribution and integration mechanism 40 and the first motor shaft 46, and thus the motor MG1 or MG2 that does not output power idles following the motor MG2 or MG1 that outputs power (see the broken line in Figure 10). In performing the clutch disengagement one motor driving mode, the connection between the motor MG1 and the sun gear 41 of the power distribution and integration mechanism 40 by the clutch C0 is released, and the clutch C1 is set to the carrier coupling state to set the transmission 60 to the first speed state, thereby causing only the motor MG2 to output power, or the clutch C1 is set to the sun gear coupling state to set the transmission 60 to the second speed state, thereby causing only the motor MG1 to output power. In the clutch disengagement one motor driving mode, as shown by the dash-single-dot line and the dash-double-dot line in Figure 10, the connection between the sun gear 41 and the motor MG1 by the clutch C0 is released, and thus following rotation of the crankshaft 26 of the stopping engine 22 and following rotation of the stopping motor MG1 or MG2 is avoided by the function of the power distribution and integration mechanism 40, thereby preventing a reduction in power transmission efficiency. Further, in performing the two motor driving mode, the connection between the motor MG1 and the sun gear 41 of the power distribution and integration mechanism 40 by the clutch C0 is released, and the clutch C1 is set to the both elements coupling state to set the transmission 60 to the first and second speed simultaneous engagement state, thereby driving and controlling one of the motors MG1 and MG2. Thus, both the motors MG1 and MG2 are caused to output power while avoiding following rotation of the engine 22, and a large amount of power can be transmitted to the drive shaft 66 in the motor driving mode, thereby allowing so-called good uphill start and ensuring good towing performance in motor running.

In the hybrid vehicle 20 of the embodiment, when the clutch disengagement one motor driving mode is selected, the speed state of the transmission 60 can be easily changed so as to efficiently transmit power to the drive shaft 66. For example, in the clutch disengagement one motor driving mode, when the clutch C1 is set to the carrier coupling state to set the transmission 60 to the first speed state and only the motor MG2 is caused to output power, the rotation speed Nm1 of the motor MG1 is adjusted so that the first motor shaft 46 rotates in synchronization with the carrier shaft 45a, and when the clutch C1 is set to the both elements coupling state, the mode can be shifted to the first and second speed simultaneous engagement state, that is, the two motor driving mode. In this state, the clutch C1 is set to the sun gear coupling state and only the motor MG1 is caused to output power, power outputted by the motor MG1 in the second speed state can be transmitted to the drive shaft 66. When the speed state of the transmission 60 is changed in the shift-down direction in the clutch disengagement one motor driving mode, it is only necessary that the above described procedure is basically performed in reverse order. Thus, in the hybrid vehicle 20 of the embodiment, the transmission 60 can be used to change the rotation speed of the carrier 45 and the sun gear 41 to amplify the torque even in the motor driving mode, and thus maximum torque required for the motors MG1 and MG2 can be reduced to reduce the sizes of the motors MG1 and MG2. In changing the speed state of the transmission 60 during the motor driving, the simultaneous engagement state of the transmission 60, namely, the two motor driving mode is once performed, thereby preventing so-called torque loss in changing the speed state, and allowing extremely smooth and shockless change in the speed state. If a required driving force is increased or the state of charge SOC of the battery 35 is reduced in the motor driving modes, cranking of the engine 22 by the motor MG1 or the motor MG2 for not outputting power according to the speed state of the transmission 60 (the clutch position of the clutch C1) is performed to start the engine 22.

As described above, in the hybrid vehicle 20 of the embodiment, the first actuator 141 of the clutch C1 included in the transmission 60 moves the first movable engaging member 151 forward and backward in the axial direction of the first motor shaft 46 or the like, thus the first movable engaging member 151 slidably supported by the first engaging portion 110 can be engaged with the third engaging portion 130 to couple the first motor shaft 46 and the sun gear shaft 62a of the change speed differential rotation mechanism 61, or the first movable engaging member 151 can be disengaged from the third engaging portion 130 to uncouple the first motor shaft 46 from the sun gear shaft 62a. The second actuator 142 of the clutch C1 moves the second movable engaging member 152 forward and backward in the axial direction of the first motor shaft 46 or the like, thus the second movable engaging member 152 (engaging portion 156) slidably supported by the sun gear shaft 62a is engaged with the second engaging portion 120 to couple the carrier shaft 45a and the sun gear shaft 62a, or the second movable engaging member 152 (engaging portion 156) is disengaged from the second engaging portion 120 to uncouple the carrier shaft 45a from the sun gear shaft 62a. Thus, with the clutch C1, one or both of the first motor shaft 46 and the carrier shaft 45a can be selectively coupled to the drive shaft 66 via the change speed differential rotation mechanism 61. Thus, in the hybrid vehicle 20, when the clutch C1 of the transmission 60 couples the carrier 45 of the power distribution and integration mechanism 40 to the drive shaft 66 via the change speed differential rotation mechanism 61, the motor MG2 as the first electric motor connected to the carrier 45 as the output element is allowed to function as the electric motor, and the motor MG1 as the second electric motor connected to the sun gear 41 as the reaction element is allowed to function as the generator. When the clutch C1 of the transmission 60 couples the sun gear 41 of the power distribution and integration mechanism 40 to the drive shaft 66 via the change speed differential rotation mechanism 61, the motor MG1 connected to the sun gear 41 as the output element is allowed to function as the electric motor and the motor MG2 connected to the carrier 45 as the reaction element is allowed to function as the generator. Thus, in the hybrid vehicle 20, switching of the coupling state by the clutch C1 is performed as appropriate, and thus the rotation speed Nm1 or Nm2 of the motor MG1 or MG2 that functions as the generator is prevented from being a negative value particularly when the rotation speed Nm2 or Nm1 of the motor MG2 or MG1 that functions as the electric motor increases, thereby preventing so-called power circulation. Also, the clutch C1 of the transmission 60 couples both the carrier 45 of the power distribution and integration mechanism 40 and the sun gear 41 to the sun gear 62 of the change speed differential rotation mechanism 61, and thus the power from the engine 22 can be mechanically (directly) transmitted to the drive shaft 66 at the fixed speed ratio. Thus, in the hybrid vehicle 20, power transmission efficiency can be increased in a broader operation region, and fuel efficiency and drive performance can be increased.

The second movable engaging member 152 of the clutch C1 includes the sliding portion 154 supported by the sun gear shaft 62a as the third rotational element slidably in the axial direction, the engaging portion 156 that can engage with the second engaging portion 120 on the side closer to the carrier shaft 45a than the flange portion 131 of the third engaging portion 130, and the connecting portion 158 that connects the sliding portion 154 and the engaging portion 156 and has the projecting piece 158b as the insertion portion inserted into the hole portion 134 formed in the third engaging portion 130. Such a second movable engaging member 152 can be used to bring the first, second and third engaging portions 110, 120, 130 close to each other to reduce the axial length of the clutch C1 in particular, thereby providing a more compact clutch C1. The clutch C1 includes a relatively small number of components, thereby providing a simpler overall configuration. Thus, with the clutch C1, the power output apparatus including the engine 22, the motors MG1 and MG2, the power distribution and integration mechanism 40, and the transmission 60 including the clutch C1 can be configured to be simpler and more compact. Further, in the embodiment, the sliding portion 154 of the second movable engaging member 152 is slidably supported by the outer peripheral portion of the sun gear shaft 62a via the spline 62s on the side opposite from the second engaging portion 120 of the third engaging portion 130, that is, rearward of the vehicle of the flange portion 131 of the third engaging portion 130, and integrated with the connecting portion 158 (flange portion 158a). Each projecting piece 158b as the insertion portion of the connecting portion 158 can project through the corresponding hole portion 134 in the flange portion 131 toward the second engaging portion 120, and the free end of each projecting piece 158b constitutes the engaging portion 156 that can engage with the second engaging portion 120. Specifically, the second movable engaging member 152 of the embodiment engages with the sun gear shaft 62a slidably in the axial direction on the side opposite from the second engaging portion 120 of the flange portion 131, and can engage with the second engaging portion 120 through the hole portion 134 formed in the flange portion 131. In the second movable engaging member 152, most part of the connecting portion 158, that is, the flange portion 158a is located on the side opposite from the second engaging portion 120 of the third engaging portion 130 (outside). This allows the connecting portion 158 of the second movable engaging member 152 and the second actuator 142 to be easily coupled, and provides a simpler overall configuration of the clutch C1.

In addition, in the embodiment, the flange-like first engaging portion 110 is formed extending radially from the end of the first motor shaft 46 and having the spline 111 in the outer periphery thereof, and the first movable engaging member 151 can engage with both the outer peripheral portion (spline 111) of the flange-like first engaging portion 110 and the third engaging portion 130 (spline 133). This reduces the space between the outer peripheral portion of the first engaging portion 110 and the third engaging portion 130, thereby reducing the size of the first movable engaging member 151 and reducing a drive load of the first actuator 141. The clutch C1 includes the support member 155 secured to the first movable engaging member 151, the coupling ring 157 rotatably supported by the support member 155 and secured to the drive member 143 of the first actuator 141, the support member 162 secured to the connecting portion 158 of the second movable engaging member 152, and the coupling ring 164 rotatably supported by the support member 162 and secured to the drive member 144 of the second actuator 142. Thus, the first actuator 141 more reliably moves the first movable engaging member 151 and the second actuator 142 more reliably moves the second movable engaging member 152 while allowing good rotation of the first movable engaging member 151 that engages with at least the first engaging portion 110 and rotates with at least the first motor shaft 46 and good rotation of the second movable engaging member 152 that engages with at least the sun gear shaft 62a and rotates with the sun gear shaft 62a.

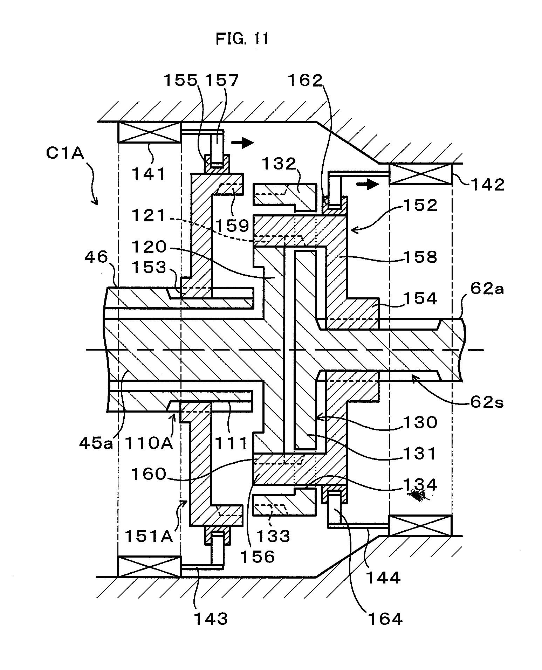

Now, with reference to Figures 11 to 14, variants of the present invention will be described. For avoiding overlapping descriptions, the same components described in relation to the hybrid vehicle 20 are denoted by the same reference numerals, and detailed descriptions thereof will be omitted.

Figure 11 is a sectional view of a clutch C1A according to a variant. In the clutch C1A in Figure 11, a spline 111 that constitutes a first engaging portion 110A is formed in an outer peripheral surface of an end (right end in the drawing) of a first motor shaft 46. A first movable engaging member 151A of the clutch C1A includes an annular flange portion having, on an inner periphery thereof, a tooth portion 153 that can engage the spline 111 (first engaging portion 110A) formed in the outer peripheral surface of the first motor shaft 46, and a cylindrical free end extending from an outer periphery of the flange portion toward a cylindrical portion 132 of a third engaging portion 130 (rearward of the vehicle). In the example in Figure 11, a tooth portion 159 that can engage with a spline 133 formed in the cylindrical portion 132 of the third engaging portion 130 is formed on an inner peripheral surface of the free end of the first movable engaging member 151A. Then, the first movable engaging member 151A is fitted in the end of the first motor shaft 46 and supported slidably in the axial direction via the spline 111. As such, the first engaging portion 110A is the spline 111 formed in the outer peripheral surface of the end of the first motor shaft 46, and thus the first movable engaging member 151A is supported at the end of the first motor shaft 46 slidably in the axial direction, thereby allowing stable and smooth movement of the first movable engaging member 151A.

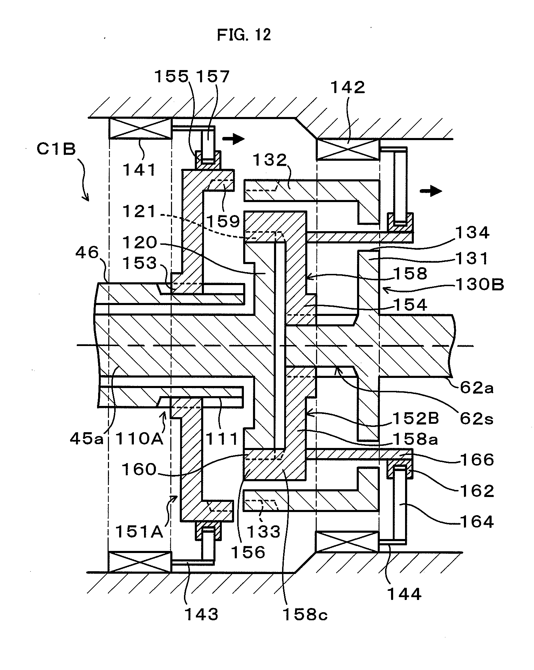

Figure 12 is a sectional view of a clutch C1B according to another variant. In the clutch C1B in Figure 12, a flange portion 131 of a third engaging portion 130B extends from a sun gear shaft 62a on the axially middle side (right side in the drawing) as compared with that in the clutch C1 in Figure 1, and a spline 62s is formed in an outer periphery of an end of the sun gear shaft 62a so as to be located closer to a carrier shaft 45a than the flange portion 131. Along with this, a cylindrical portion 132 of the third engaging portion 130B extends in the axial direction so as to surround both the spline 62s of the sun gear shaft 62a and the second engaging portion 120 of the carrier shaft 45a as compared with that in the clutch C1 in Figure 1. A second movable engaging member 152B included in the clutch C1B includes a sliding portion 154 supported by the sun gear shaft 62a slidably in the axial direction via the spline 62s on the side closer to the carrier shaft 45a than the flange portion 131 of the third engaging portion 130 (left side in the drawing), an engaging portion 156 that can engage with the second engaging portion 120 on the side closer to the carrier shaft 45a than the flange portion 131, and a connecting portion 158 connecting the sliding portion 154 and the engaging portion 156. The connecting portion 158 includes a flange portion 158a integrated with the sliding portion 154 and extending radially, and a short cylindrical portion 158c extending from an outer peripheral portion of the flange portion 158a forward of the vehicle (left side in the drawing), and a free end of the cylindrical portion 158c having a tooth portion 160 on an inner periphery thereof constitutes the engaging portion 156. Thus, the entire second movable engaging member 152B is located closer to the carrier shaft 45a than the flange portion 131 of the third engaging portion 130. In the example in Figure 12, to a back surface of the connecting portion 158 of the second movable engaging member 152B, one ends (left end in the drawing) of a plurality of coupling member 166 projecting through hole portions 134 formed in the flange portion 131 of the third engaging portion 130 so as to be apart from the second engaging portion 120 are secured. To the other end of each coupling member 166, an annular support member 162 that can rotatably hold the annular coupling ring 164 is secured. The coupling ring 164 held by the support member 162 is secured to a tip of a drive member 144 of a second actuator 142 secured to an inner peripheral surface of a transmission case. Thus, the second actuator 142 moves the second movable engaging member 152B supported by the sun gear shaft 62a slidably in the axial direction toward the carrier shaft 45a (leftward in the drawing), and thus the tooth portion 160 of the engaging portion 156 is allowed to engage with a spline 121 formed in an outer peripheral portion of the second engaging portion 120. In this state, the second movable engaging member 152B is moved in the arrow direction in the drawing to allow the second movable engaging member 152B to be disengaged from the second engaging portion 120. As such, the second movable engaging member 152B included in the clutch C1B in Figure 12 can engage with the sun gear shaft 62a slidably in the axial direction on the side closer to the second engaging portion 120 than the flange portion 131 of the third engaging portion 130 and engage with the second engaging portion 120, and is coupled to the second actuator 142 via the coupling member 166 as the insertion portion inserted into the hole portion 134 formed into the flange portion 131. The second movable engaging member 152B included in the clutch C1B has a simple outer shape and can be easily produced as compared with the second movable engaging member 152 in Figure 1. Thus, the second movable engaging member 152B can be used to provide a simpler overall configuration of the clutch C1B. The coupling member 166 as the insertion portion inserted into the hole portion 134 formed in the flange portion 131 of the third engaging portion 130 can be used to easily couple the second movable engaging member 152B and the second actuator 142.

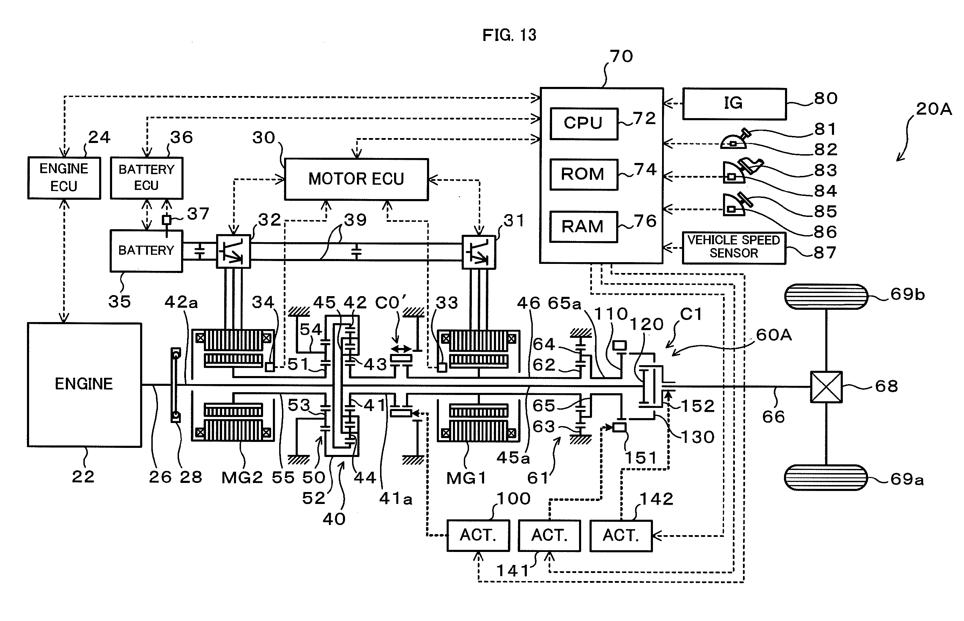

Figure 13 is a schematic block diagram of a hybrid vehicle 20A according to a variant of the hybrid vehicle of the present invention. In the hybrid vehicle 20A in the drawing, a clutch CO' that functions as a connection and disconnection unit for connecting a sun gear shaft 41a and a first motor shaft 46 and disconnecting the sun gear shaft 41a from the first motor shaft 46 and functions as a securing module that can non-rotatably secure the first motor shaft 46 (sun gear 41) as a rotating shaft of a motor MG1 is provided between the sun gear shaft 41a and the first motor shaft 46. In the hybrid vehicle 20A, the hollow first motor shaft 46 is connected to the sun gear 62 as an input element of a change speed differential rotation mechanism (transmission unit) 61 of a transmission 60A. Further, in the transmission 60A, a hollow carrier shaft 65a extending rearward of the vehicle is connected to a carrier 65 as an output element of the change speed differential rotation mechanism 61, and a first engaging portion 110 is formed at an end of the carrier shaft 65a. Then, the carrier shaft 45a connected to the carrier 45 of a power distribution and integration mechanism 40 passes through the first motor shaft 46 and the change speed differential rotation mechanism 61 (carrier shaft 65a) and has a second engaging portion 120 at an end thereof, and a third engaging portion 130 is formed at an end of a drive shaft 66. Thus, a clutch C1 of the transmission 60A is configured to selectively couple one or both of the hollow carrier shaft (first rotational element) 65a connected to the carrier 65 as the output element of the change speed differential rotation mechanism 61 and extending rearward of the vehicle, and the carrier shaft (second rotational element) 45a passing through the first motor shaft 46 and the change speed differential rotation mechanism 61 (carrier shaft 65a) to the drive shaft (third rotational element) 66. Specifically, in the transmission 60A, the carrier shaft 65a as the first rotational element of the clutch C1 is connected to the sun gear 41 as the second element of the power distribution and integration mechanism 40 via the change speed differential rotation mechanism 61 that can change the speed of inputted power and output the power, the first motor shaft 46 and the like. Also in the hybrid vehicle 20A thus configured, the same operation and effect as the above described hybrid vehicle 20 can be obtained.

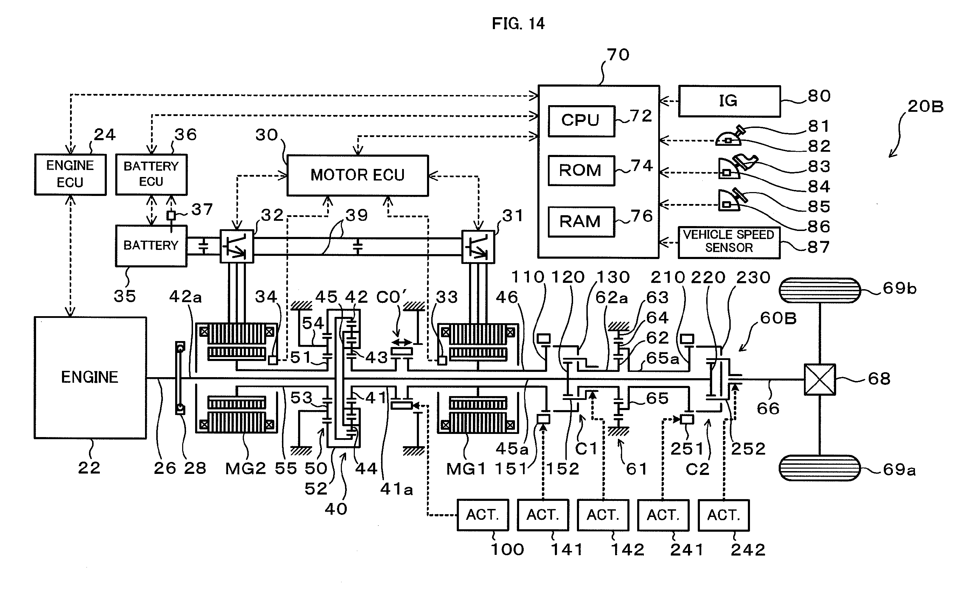

Figure 14 is a schematic block diagram of a hybrid vehicle 20B according to another variant. The hybrid vehicle 20B in the drawing includes the clutch C0' in Figure 12 instead of the clutch C0 and the brake B0 in the hybrid vehicle 20 in Figure 1, and a transmission 60B including clutches C1 and C2 and a change speed differential rotation mechanism (reduction module) 61 instead of the transmission 60. The clutch C1 of the transmission 60B can selectively couple one or both of a first motor shaft 46 and a carrier shaft 45a to a sun gear 62 of the change speed differential rotation mechanism 61. In this case, a sun gear shaft 62a as a third rotational element of the clutch C1 included in the transmission 60B is, as shown in Figure 14, formed into a hollow shape so that the carrier shaft 45a can be extended rearward of the vehicle. The clutch C2 of the transmission 60B is configured in the same manner as the clutch C1 (C1A), and includes a first engaging portion 210, a second engaging portion 220, a third engaging portion 230, a first movable engaging member 251, a second movable engaging member 252, a first actuator 241, and a second actuator 242. In this case, to a carrier 65 as an output element of the change speed differential rotation mechanism 61, a hollow carrier shaft 65a extending rearward of the vehicle is connected, and the first engaging portion 210 is formed at an end of the carrier shaft 65a. Further, the carrier shaft 45a connected to the carrier 45 of the power distribution and integration mechanism 40 passes through the sun gear shaft 62a and the change speed differential rotation mechanism 61 (carrier shaft 65a) and has the second engaging portion 220 at an end thereof, and the third engaging portion 230 is formed at an end of a drive shaft 66. Thus, the clutch C2 is configured to selectively couple one or both of the hollow carrier shaft (first rotational element) 65a connected to the carrier 65 as the output element of the change speed differential rotation mechanism 61, and the carrier shaft (second rotational element) 45a connected to the carrier 45 as the first element of the power distribution and integration mechanism 40 to the drive shaft (third rotational element) 66. With such a transmission 60B, the clutches C1 and C2 can be controlled to reduce the speed of power from one of the carrier 45 of the power distribution and integration mechanism 40 and the sun gear 41 with the change speed differential rotation mechanism 61 and transmit the power to the drive shaft 66, directly transmit power from the carrier 45 to the drive shaft 66, or mechanically (directly) transmit power from the engine 22 to the drive shaft 66 at a fixed speed ratio. Thus, in the hybrid vehicle 20B in Figure 14, the same operation and effect as the hybrid vehicles 20 and 20A can be obtained.

The clutches C1, C1A and C1B are all used for selectively outputting power inputted from two rotational elements to one rotational element, but not limited to this. Specifically, the clutches C1 or the like may be configured to selectively output power inputted from one rotational element to two rotational elements. Further, at least one of three rotational elements to which the clutches C1 or the like are applied may be formed into a hollow shape, but not limited to this. Further, the hybrid vehicles 20, 20A and 20B may be configured as front wheel drive vehicles. In the embodiment, the power output apparatus is described mounted in the hybrid vehicles 20, 20A, and 20B, but the power output apparatus according to the present invention may be mounted in vehicles other than automobiles or mobile bodies such as ships or aircraft, or may be incorporated into secured facilities such as construction facilities.

Hereinbefore, the embodiments of the present invention have been described with reference to drawings, but the present invention is not limited to the above embodiments. It will be apparent that various modifications can be made to the present invention without departing from the spirit and scope of the present invention.

The present invention can be used in a manufacturing industry of a coupling device, a power output apparatus, a hybrid vehicle and the like.

## Claims

1. A coupling device that can selectively couple a first rotational element and a second rotational element arranged coaxially with each other to a third rotational element arranged coaxially with said first and second rotational elements, said coupling device comprising:
a first engaging portion provided in said first rotational element;
a second engaging portion provided in said second rotational element so as to be spaced apart from said first engaging portion in an axial direction of said first, second and third rotational elements;
a flange-like third engaging portion provided in said third rotational element so as to face said second engaging portion;
a first movable engaging element that can engage with both said first engaging portion and said third engaging portion and is arranged movably in said axial direction;
a first drive unit that moves said first movable engaging element in said axial direction;
a second movable engaging element including a sliding portion supported by said third rotational element slidably in said axial direction, an engaging portion that can engage with said second engaging portion on the side closer to said second rotational element than said third engaging portion, and a connecting portion that connects said sliding portion and said engaging portion and has an insertion portion inserted into a hole portion formed in said third engaging portion; and
a second drive unit that is connected to said connecting portion of said second movable engaging element, and moves said second movable engaging element in said axial direction.

2. A coupling device according to claim 1, wherein said sliding portion of said second movable engaging element is slidably supported by an outer peripheral portion of said third rotational element on the side opposite from said second engaging portion of said third engaging portion and integrated with said connecting portion, wherein said insertion portion of said connecting portion can project through said hole portion of said third engaging portion toward said second engaging portion, and wherein said engaging portion of said second movable engaging element is formed at a free end portion of said insertion portion.

3. A coupling device according to claim 1, wherein said sliding portion of said second movable engaging element is slidably supported by an outer peripheral portion of said third rotational element on the side closer to said second engaging portion than said third engaging portion, and wherein said insertion portion of said connecting portion is a coupling member that is secured to said connecting portion, said insertion portion projecting through said hole portion of said third engaging portion so as to be spaced apart from said second engaging portion and being coupled to said second drive unit.

4. A coupling device according to claim 1, wherein said first engaging portion is a flange portion formed at an end portion of said first rotational element, and wherein said first movable engaging element can engage with both an outer peripheral portion of said flange portion and said third engaging portion.

5. A coupling device according to claim 1, wherein said first engaging portion is formed in an outer periphery of an end portion of said first rotational element, and wherein said first movable engaging element engages with said first engaging portion slidably in said axial direction.

6. A coupling device according to claim 1, wherein at least one of said first, second and third rotational elements is formed into a hollow shape.

7. A coupling device according to claim 1, further comprising:
a first annular member secured to one of said first movable engaging element and said first drive unit;
a first support member that is secured to the other of said first movable engaging element and said first drive unit and can rotatably support said first annular member;
a second annular member secured to one of said connecting portion of said second movable engaging element and said second drive unit; and
a second support member that is secured to the other of said connecting portion of said second movable engaging element and said second drive unit and can rotatably support said second annular member.

8. A power output apparatus including a coupling device according to claim 1, said power output apparatus comprising:
a drive shaft;
an internal combustion engine;
a first electric motor that can input and output power;
a second electric motor that can input and output power; and
a power distribution and integration mechanism that includes a first element connected to a rotating shaft of said first electric motor, a second element connected to a rotating shaft of said second electric motor, and a third element connected to an engine shaft of said internal combustion engine, and is configured to allow differential rotation of the three elements, one of said first and second elements of said power distribution and integration mechanism being connected to said first rotational element of said coupling device, the other of said first and second elements of said power distribution and integration mechanism being connected to said second rotational element of said coupling device, said drive shaft being connected to said third rotational element of said coupling device.

9. A hybrid vehicle including a power output apparatus according to claim 8, said hybrid vehicle comprising drive wheels driven by power from said drive shaft.

10. A coupling device that can selectively couple a first rotational element and a second rotational element arranged coaxially with each other to a third rotational element arranged coaxially with said first and second rotational elements, said coupling device comprising:
a first engaging portion provided in said first rotational element;
a second engaging portion provided in said second rotational element so as to be spaced apart from said first engaging portion in an axial direction of said first, second and third rotational elements;
a flange-like third engaging portion provided in said third rotational element so as to face said second engaging portion;
a first movable engaging element that can engage with both said first engaging portion and said third engaging portion and is arranged movably in said axial direction;
a first drive unit that moves said first movable engaging element in said axial direction;
a second movable engaging element that is supported by said third rotational element slidably in said axial direction on the side opposite from said second engaging portion of said third engaging portion, and can engage with said second engaging portion through a hole portion formed in said third engaging portion; and
a second drive unit that moves said second movable engaging element in said axial direction.

11. A coupling device that can selectively couple a first rotational element and a second rotational element arranged coaxially with each other to a third rotational element arranged coaxially with said first and second rotational elements, said coupling device comprising:
a first engaging portion provided in said first rotational element;
a second engaging portion provided in said second rotational element so as to be spaced apart from said first engaging portion in an axial direction of said first, second and third rotational elements;
a flange-like third engaging portion provided in said third rotational element so as to face said second engaging portion;
a first movable engaging element that can engage with both said first engaging portion and said third engaging portion and is aranged movably in said axial direction;
a first drive unit that moves said first movable engaging element in said axial direction;
a second movable engaging element that is supported by said third rotational element slidably in said axial direction on the side closer to said second engaging portion than said third engaging portion, and can engage with said second engaging portion; and
a second drive unit that is coupled to said second movable engaging element via a coupling member inserted into a hole portion formed in said third engaging portion, and moves said second movable engaging element in said axial direction.
